Europäisches Patentamt

**European Patent Office**

Office européen des brevets

(11) Numéro de publication: **0 265 306 B1**

# FASCICULE DE BREVET EUROPEEN

(45) Date de publication de fascicule du brevet:
**24.07.91**

(51) Int. Cl.⁵: **B60R 25/04**, B60R 16/02

(21) Numéro de dépôt: 87402089.4

(22) Date de dépôt: **18.09.87**

(54) **Système de commande à fonctions multiples d'un véhicule automobile.**

(30) Priorité: **23.09.86 FR 8613320**

(43) Date de publication de la demande:
**27.04.88 Bulletin 88/17**

(45) Mention de la délivrance du brevet:
**24.07.91 Bulletin 91/30**

(84) Etats contractants désignés:
**DE ES GB IT**

(56) Documents cités:
EP-A- 0 088 490        FR-A- 2 338 533
FR-A- 2 403 914        GB-A- 1 531 951
GB-A- 2 051 442        GB-A- 2 081 483
US-A- 3 634 880

(73) Titulaire: **REGIE NATIONALE DES USINES RE-
NAULT
Boîte postale 103 8-10 avenue Emile Zola
F-92109 Boulogne-Billancourt(FR)**

(72) Inventeur: **Gueguen, Yves
58, rue de Sèvres
F-92100 Boulogne Billancourt(FR)**
Inventeur: **Malvot, Gérard
91, rue Pierre Brossolette
F-92500 Rueil-Malmaison(FR)**

(74) Mandataire: **Ernst-Schonberg, Michel et al
REGIE NATIONALE DES USINES RENAULT (S.
0267) 8 & 10, avenue Emile Zola
F-92109 Boulogne Billancourt Cédex(FR)**

## Description

La présente invention se rapporte à un système de commande comportant, sur le tableau de bord, un poste de visualisation d'informations faisant partie d'un ensemble électronique de commande et un boîtier portatif de télécommande capable d'émettre un message en infrarouges sur un récepteur de télécommande à infrarouges monté dans l'habitacle du véhicule.

On connait par le brevet français 2 420 008, un dispositif de fermeture et d'ouverture de portes comportant un boîtier portatif émetteur d'ondes infrarouges coopérant avec un récepteur monté sur le véhicule pour la commande à distance des portes d'un véhicule automobile.

On connait par le brevet français 2 570 037, un poste de commande audio-tactile pour véhicule automobile dans lequel un ensemble vocal est combiné à un poste de visualisation à écran tactile.

La présente invention a pour but de fournir un système de commande de véhicule dans lequel le boîtier émetteur d'infrarouges sert à commander la mise en marche de l'ensemble électronique et coopère avec ce système pour assurer une fonction antivol. Ce système est particulièrement adapté à un système à commande vocale.

Le système selon l'invention est caractérisé par le fait que le récepteur de télécommande est couplé à l'ensemble électronique de commande de manière à commander la mise sous tension de l'unité électronique de commande au moment de la commande d'ouverture des portes et par le fait que le poste de visualisation comporte un lecteur de réception du boîtier de télécommande connecté à l'ensemble électronique et que le boîtier de télécommande contient une mémoire qui se connecte à l'ensemble électronique de commande.

Selon un mode particulier de réalisation de cette invention il comporte un bouton de démarrage rapide connecté à l'unité centrale.

L'invention va maintenant être décrite en se référant à un mode de réalisation donné à titre d'exemple et représenté par les dessins annexés, sur lesquels :

- la figure 1 est un schéma du système selon l'invention,

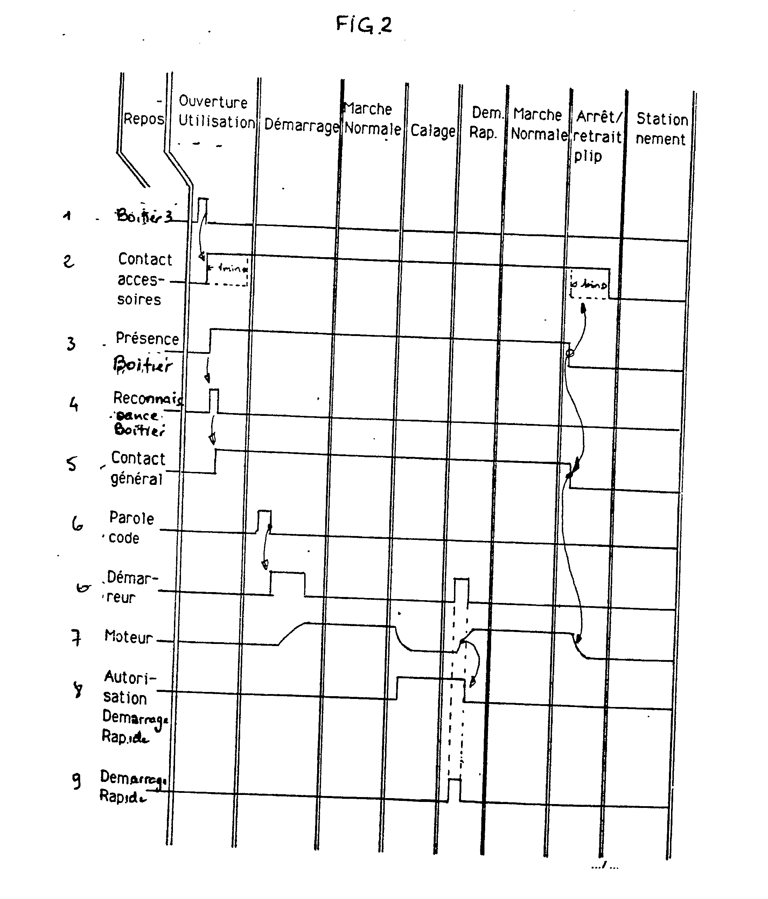

- la figure 2 est un diagramme des phases illustrant le fonctionnement du système.

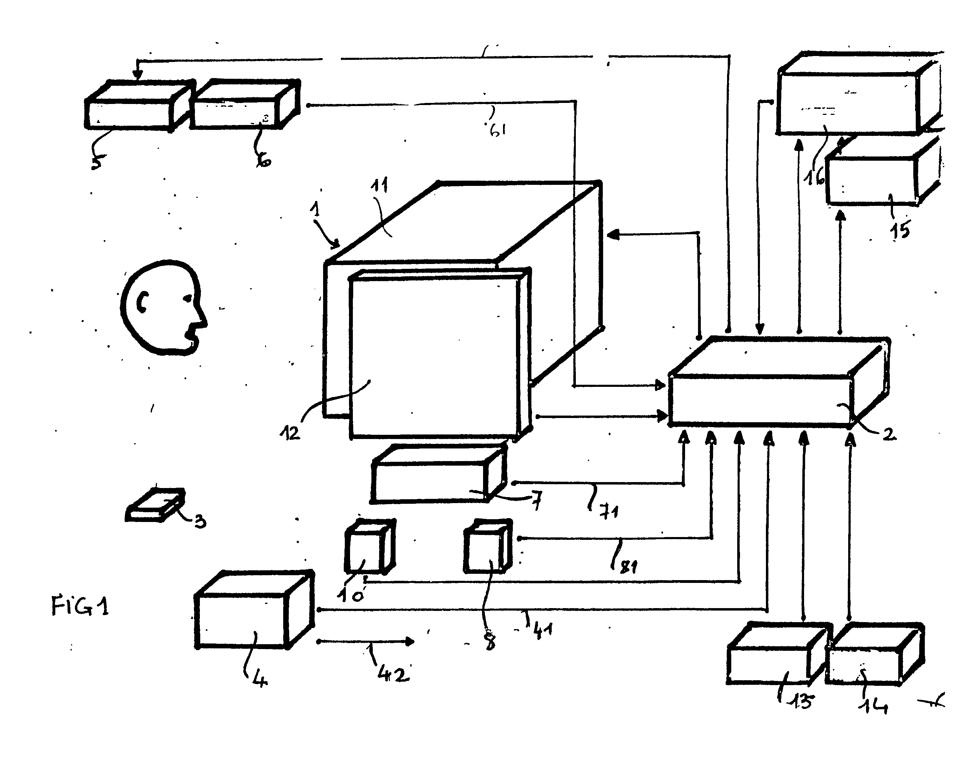

En se référant à la figure 1, le système comprend un poste de visualisation 1 qui se place sur la partie centrale du tableau de bord à droite du volant. Il se compose d'un moniteur 11 servant à l'affichage d'informations et d'un écran tactile 12. L'écran tactile 12 est connecté à une unité centrale 2 qui regroupe des cartes électroniques et des mémoires. L'unité centrale envoie des signaux de commande au moniteur 11.

Le système comprend un boîtier portatif 3 de télécommande qui rassemble une fonction mémoire et une fonction de télécommande infrarouge. Il est capable d'émettre un signal codé infrarouge et, à cet effet, il comporte une diode émettrice recevant un signal d'un circuit générateur de signal codé par l'intermédiaire d'un amplificateur, le circuit générateur de signal codé étant alimenté par une pile. Le boîtier comporte un bouton poussoir qui lorsqu'il est actionné par le conducteur du véhicule déclenche l'émission du signal infrarouge codé.

Dans le véhicule est monté un récepteur de télécommande à infrarouges 4 qui reçoit le signal codé provenant du boîtier de télécommande portatif 3. Ce récepteur comprend une photodiode et il est relié en 41 à l'unité centrale 2. Il commande, en 42 par l'intermédiaire d'un ensemble connu en soi, l'ouverture et la fermeture des portes.

Le système comporte un dispositif de reconnaissance et de synthèse de la parole. Le dispositif de synthèse comporte un haut-parleur 5 monté dans l'habitacle du véhicule. Le dispositif de reconnaissance comporte un capteur acoustique 6 (micro) monté également dans l'habitacle à un endroit permettant réception des ordres donnés par l'occupant du véhicule.

Le haut-parleur 5 est relié en 51 à l'unité centrale 2. Le capteur acoustique est relié en 61 à l'unité centrale 2.

Le système comporte sur le tableau de bord ou à proximité de celui-ci un lecteur 7 de boîtier émetteur. Il permet l'enfichage du boîtier portable 3 de commande. Il est doté, à cet effet, d'un connecteur multi-broches femelle (ou mâle) qui se connecte avec un connecteur multi-broches mâle (ou femelle) du boîtier émetteur 3. Celui-ci est connecté en 71 à l'unité centrale 2.

Le boîtier 3 assure une fonction de mémoire. La mémoire contient un code secret seulement connu par le système qui devra le lire ainsi que les références acoustiques du propriétaire du véhicule.

Dans l'habitacle est disposé un bouton 8 de démarrage rapide qui est connecté en 81 à l'unité centrale 2. Celle-ci est également connectée à un bouton de sécurité 10.

L'unité centrale 2 est connectée à un capteur d'embrayage 13 et à un capteur de point mort 14. Elle est reliée à un contact général 15 et au système d'allumage 16 du moteur.

Le fonctionnement du système va maintenant être expliqué.

Pour l'utilisation, le conducteur dispose à la place du jeu de clés traditionnel, un boîtier portatif 3. Lorsque le conducteur appuie sur le bouton du boîtier 3, il actionne la télécommande infrarouge qui déverrouille les portes (phase 1) et met sous tension le système monté dans l'habitacle pendant un laps de temps déterminé.

Lorsque le conducteur est entré dans le véhicule, il enfiche le boîtier de commande 3 dans le lecteur 7 logé dans l'habitacle.

Le système compare le code secret contenu dans le boîtier portatif avec un code qui est mémorisé dans l'unité centrale. Si les deux codes sont identiques, le système met sous tension le contact général 15.

En cas de discordance, le système s'arrête.

Pour faire démarrer le moteur, le conducteur doit prononcer son mot-clé (ex. : prénom, nom) ou taper un code secret sur le clavier du poste.

Après vérification de l'identité de la commande parlée et de la commande enregistrée résidant dans la mémoire du boîtier 3 ou de la validité du code clavier, le système vérifie que la voiture n'est pas en prise et en lance le démarrage en actionnant le démarreur et en déverrouillant l'allumage 16.

Le retrait du boîtier de télécommande 3 provoque l'arrêt du moteur par coupure du contact général.

Le bouton de démarrage rapide 8 permet de relancer directement le moteur lors d'un calage et est validé par l'unité centrale 2 lorsqu'un premier démarrage du moteur a eu lieu, lors que le boîtier de télécommande n'a pas été retiré depuis et lors que le moteur est arrêté.

Il est bien entendu que l'on peut sans sortir du cadre de l'invention imaginer des variantes et des perfectionnements de détails et de même envisager l'emploi de moyens équivalents.

**Revendications**

1. Système de commande à fonctions multiples d'un véhicule automobile comportant sur le tableau de bord un poste de visualisation d'informations faisant partie d'un ensemble électronique de commande (2) et un boîtier portatif de télécommande (3) capable d'émettre un message en infrarouges sur un récepteur (4) de télécommande à infrarouges monté dans l'habitacle du véhicule, caractérisé par le fait que le récepteur de télécommande est couplé à l'ensemble électronique de commande (2) de manière à commander la mise sous tension de l'unité électronique (2) de commande au moment de la commande d'ouverture des portes et par le fait que le poste de visualisation comporte un lecteur de réception (7) du boîtier de télécommande connecté à l'ensemble électronique et que le boîtier de télécommande (3) contient une mémoire qui se connecte à l'ensemble électronique de commande.

2. Système selon la revendication 1, caractérisé par le fait qu'il comporte un bouton de démarrage rapide connecté à l'unité centrale.

**Claims**

1. A multiple-function control system for a motor vehicle comprising on the instrument panel a data display station forming part of an electronic control assembly (2) and a portable remote control box (3) capable of emitting an infra-red message to an infra-red remote control receiver (4) mounted in the passenger compartment of the vehicle characterised in that the remote control receiver is coupled to the electronic control assembly (2) in such a way as to control the application of voltage to the electronic control unit (2) at the moment of the command for opening of the doors and that the display station comprises a reader (7) for receiving the remote control box which is connected to the electronic assembly and that the remote control box (3) contains a memory which connects to the electronic control assembly.

2. A system according to claim 1 characterised in that it comprises a fast start button connected to the central unit.

**Patentansprüche**

1. Steuervorrichtung mit mehrfachen Funktionen für ein Kraftfahrzeug, mit einer am Armaturenbrett vorgesehenen Anzeigevorrichtung für Informationen, die Teil einer elektronischen Steueranordnung (2) ist und mit einem tragbaren Gehäuse für eine Fernsteuerung (3), die ein Infrarotsignal auf einen für Infrarotsignale empfindlichen Empfänger (4) aussenden kann, welcher im Fahrgastraum des Fahrzeugs befestigt ist, dadurch gekennzeichnet, daß der ferngesteuerte Empfänger mit der elektronischen Steueranordnung (2) dergestalt verbunden ist, daß er die Beaufschlagung der elektronischen Steueranordnung (2) mit Spannung zum Zeitpunkt des Steuersignals für die Türöffnung steuert, daß die Anzeigevorrichtung einen Aufnehmer (7) für das Gehäuse der Fernbedienung aufweist, der mit der elektronischen Steueranordnung verbunden ist und daß das Gehäuse der Fernbedienung (3) einen Speicher enthält, der mit der elektronischen Steueranordnung verbindbar ist.

2. Vorrichtung nach Anspruch 1, dadurch gekennzeichnet, daß sie einen Knopf zum schnellen Starten aufweist, der mit einer zentralen Recheneinheit verbunden ist.

3

FIG 1

4

## FiG.2